# EUROPÄISCHE PATENTSCHRIFT

(11) **EP 0 979 748 B1**
(45) Veröffentlichungstag und Bekanntmachung des Hinweises auf die Patenterteilung: **16.11.2005**
(21) Anmeldenummer: 99109827.8
(22) Anmeldetag: 19.05.1999
(51) Int. Cl.: B60N 2/04, B60N 2/16, B60N 2/07

(54) **Sitzgestell eines verstellbaren Fahrzeugsitzes**
Seat frame for an adjustable vehicle seat
Monture de siège d'un siège de véhicule réglable

(30) Priorität: 12.08.1998 DE 19836425
(43) Veröffentlichungstag der Anmeldung: 16.02.2000
(73) Patentinhaber: C.Rob. Hammerstein GmbH & Co.KG, 42699 Solingen (DE)
(72) Erfinder: Frohnhaus, Ernst-Reiner, 42653 Solingen (DE); Becker, Burckhard, 42655 Solingen (DE); Beneker, Wilfried, Dr., 42799 Leichlingen (DE)
(74) Vertreter: Bauer, Wulf

(56) Entgegenhaltungen:
- DE-A- 3 525 374
- US-A- 5 573 219

## Beschreibung

Die Erfindung bezieht sich auf ein Sitzgestell eines verstellbaren Fahrzeugsitzes mit einem Sitzträger, der zwei Seitenteile und eine rückwärtige Traverse aufweist, und mit mindestens einer Querwelle zur Übertragung einer Verstellbewegung von einer Sitzseite auf die andere, die In den beiden Sitzteilen gelagert ist und an der für jede Sitzseite ein Verstellarm befestigt ist.

Sitzgestelle werden nach dem Stand der Technik als Schweißkonstruktion ausgeführt. Die beiden Seitenteile sind also jeweils mit der rückwärtigen Traverse verschweißt, beispielsweise über Punktschweißungen. Dies führt zu einer stabilen, den praktischen Ansprüchen entsprechenden Konstruktion.

Nachteilig bei einer derartigen Schweißkonstruktion eines Sitzgestells der eingangs genannten Art ist jedoch der relativ hohe Aufwand bei der Fertigung. So müssen die einzelnen Teile vor dem Zusammenschweißen komplett zusammengefügt werden, beispielsweise muß die Querwelle montiert sein, bevor die beiden Seitenteile mit der rückwärtigen Traverse verbunden werden können. Es ist nach dem Stand der Technik auch nicht möglich, ein durchgehendes Teil zu verwenden, das einstückig sowohl die beiden Seitenteile als auch die rückwärtige Traverse ausbildet, weil die Montage der mindestens einen Querwelle nicht realisierbar ist.

Die Konstruktion nach dem Stand der Technik bringt es mit sich, dass ein Sitzträger nach Montage und Verschweißen nicht mehr geändert werden kann. Dies hat zur Folge, dass der komplette Sitzträger des Sitzgestells im Montage- und Schweißvorgang komplett erstellt werden muß, es ist nicht möglich, unter Verwendung von Baugruppen zu arbeiten. Bei unterschiedlich ausgerüsteten Sitzträgern, beispielsweise solchen mit einer Verstellung und ohne eine Verstellung, müssen jeweils die kompletten Sitzträger zusammengesetzt werden, bei unterschiedlicher Ausrüstung benötigt man also auch unterschiedliche Montage- und Schweißstationen.

Nun kann man auch an einem fertiggestellten Sitzträger, der entsprechende Lagerbohrungen für eine Querwelle aufweist, die Querwelle nachträglich anordnen, wenn diese noch axial frei einschiebbar ist. Dies bedeutet aber, dass an ihr zu befestigende Verstellarme nachträglich angebracht werden müssen. Auf diese Weise wird der Montagevorgang wiederum erschwert.

Hier setzt nun die Erfindung ein. Sie hat es sich zur Aufgabe gemacht, einen Sitzträger eines Sitzgestells der eingangs genannten Art dahingehend weiter zu entwickeln, dass auch in einen fertiggestellten Sitzträger nachträglich eine Querwelle eingefügt werden kann, also ein modularer Aufbau möglich ist.

Diese Aufgabe wird ausgehend von dem Sitzgestell der eingangs genannten Art dadurch gelöst, dass mindestens ein Seitenteil eine - vorzugsweise nach unten offene - Aufnahmebucht hat, die die Querwelle frei aufnimmt, dass neben der Aufnahmebucht erste Befestigungsmittel im Seitenteil vorgesehen sind, und dass die Querwelle (vorzugsweise zwischen den an ihr befestigten Verstellarmen) von einem Lagerteil umgriffen wird, das die Lagerung der Querwelle übernimmt, die Aufnahmebucht überbrückt und den ersten Befestigungsmitteln entsprechende zweite Befestigungsmittel ausbildet.

Es genügt, dass nur ein Seitenteil eine Aufnahmebucht hat, weil bei der nachträglichen Montage der Querwelle die Querwelle schräg in eine Lageröffnung des anderen Seitenteils hineingeführt werden kann, so dass dort eine Aufnahmebucht nicht nötig ist. Grundsätzlich ist es aber möglich, an beiden Seitenteilen eine Aufnahmebucht vorzusehen. In bevorzugter Ausführung hat jedoch nur ein Seitenteil eine derartige Aufnahmebucht

Aufgrund der Aufnahmebucht kann die mindestens eine Querwelle nachträglich und in fertig konfektionierter Form montiert werden. Dabei spielt es keine Rolle, ob sich mindestens einer der Verstellarme außerhalb des Bereichs zwischen den beiden Seitenteilen befindet oder nicht. Üblicherweise sind die beiden Verstellarme innerhalb des Bereichs, der durch die beiden Seitenteile definiert wird. Die Erfindung ermöglicht es, zumindest einen Verstellarm auch außerhalb, also an der Außenseite des zugehörigen Seitenteils, anzuordnen. Sieht man in jedem Seitenteil eine Aufnahmebucht vor, so können auch beide Verstellarme auf der Außenseite des jeweils zugehörigen Seitenteils angeordnet sein.

Das Lagerteil zusammen mit der Aufnahmebucht bildet die Lagerung für die Querwelle in dem Jeweiligen Seitenteil. Das Lagerteil ist so ausgeführt, dass es in der Aufnahmebucht fixiert werden kann, die Fixierung kann über einen Schweißvorgang erfolgen, sie kann aber auch über Niete, Schrauben und dergleichen durchgeführt werden.

Erfindungsgemäß kann ein Sitzgestell sowohl in Schweißkonstruktion als auch mit lösbaren Verbindungsmitteln zwischen den beiden Seitenteilen und der Traverse oder einstückig ausgeführt werden. Üblicherweise hat das Sitzgestell auch noch eine frontseitige Traverse, die ebenfalls lösbar oder permanent mit den beiden Seitenteilen verbunden ist.

In einer besonders bevorzugten Ausbildung der Erfindung befindet sich das Lagerteil zwischen dem zugehörigen Verstellarm und einem Antriebsteil, das beispielsweise als Zahnbogen ausgeführt ist. Die Anordnung eines Verstellarms auf der anderen Seite des zugehörigen Seitenteils als das Antriebsteil, mit dem die Schwenkbewegung der Querwelle erfolgt, ist nach dem Stand der Technik aufwendig, weil bei einer Schweißkonstruktion immer der komplette Sitzträger, wie oben erläutert, erstellt werden muß. Diese aufwendige Montage wird nunmehr vermieden, die Teile können nacheinander angebracht werden. Dies macht sich insbesondere bei unterschiedlich ausgerüsteten Sitzträgern sehr vorteilhaft bemerkbar. So können zunächst die Seitenteile und die Traverse miteinander verbunden werden, ohne dass es der Montage der sonstigen Teile bedarf. Vielmehr können die sonstigen Teile, wie beispielsweise die üblicherweise zwei Querwellen und auch die frontseitige Traverse, nachträglich eingesetzt werden. Auf diese Weise lassen sich unterschiedlich ausgerüstete Sitzgestelle in den Anfangsschritten noch in den gleichen Vorrichtungen fertigen, erst später wird eine Spezialisierung notwendig.

Die Querwelle hat in bevorzugter Ausführung nur ein einziges Antriebsteil, das einem Seitenteil zugeordnet ist. In bevorzugter Ausführungsform der Erfindung ist der Verstellarm des anderen Seitenteils auf der Innenseite dieses Seitenteils und damit zwischen den beiden Seitenteilen angeordnet. Dann ist es möglich, in dem betrachteten Seitenteil eine Lagerbohrung vorzusehen, in die ein freier Endbereich der Querwelle eingesteckt werden kann. Der freie Endbereich steht dabei gegenüber dem Verstellarm frei vor.

In einer bevorzugten Weiterbildung der Erfindung ist die Traverse lösbar mit den Seitenteilen verbunden. Auf diese Weise schafft man sich die Möglichkeit, die Traverse nachträglich auszutauschen, dies hat Vorteile bei einer Traverse, die beispielsweise mit Fixiermitteln für einen Kindersitz, beispielsweise eine sogenannte Isofix-Befestigung, ausgerüstet werden soll. Insofern ist es ein weiteres Merkmal der Erfindung, dass die Traverse mit Haltemitteln für eine Kleinkinderaufnahme ausgerüstet ist.

Die mindestens einer Querwelle kann einerseits eine vordere Querwelle, andererseits eine hintere Querwelle sein. Bevorzugt wird eine hintere Querwelle eingesetzt und wird als Verstellmöglichkeit für die Sitzvorderkante eine Schwenkbrücke eingesetzt, die im vorderen Bereich der Seitenteile gelagert ist. Auch für sie ergibt sich die Möglichkeit einer nachträglichen Montage.

Weitere Vorteile und Merkmale der Erfindung ergeben sich aus den übrigen Ansprüchen sowie der nun folgenden Beschreibung eines nicht einschränkend zu verstehenden Ausführungsbeispiels der Erfindung, das unter Bezugnahme auf die Zeichnung im folgenden näher erläutert wird. In dieser Zeichnung zeigen:
- FIG. 1:: eine perspektivische Darstellung eines Sitzträgers für ein Sitzgestell in Form eines Montagebildes,
- FIG. 2:: eine Darstellung des Sitzträgers ähnlich Fig. 1, jedoch nicht als Montagebild, sondern in zusammengesetzter Form und
- FIG. 3:: eine perspektivische Darstellung eines Seitenteils und eines Elektromotors.

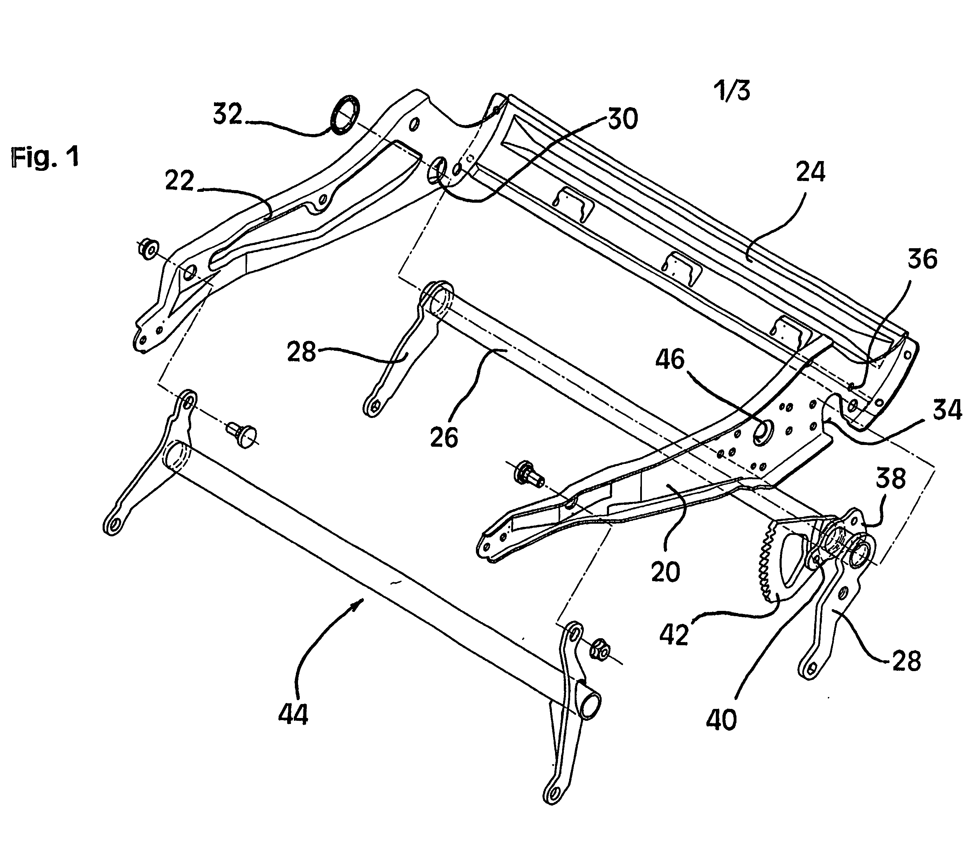

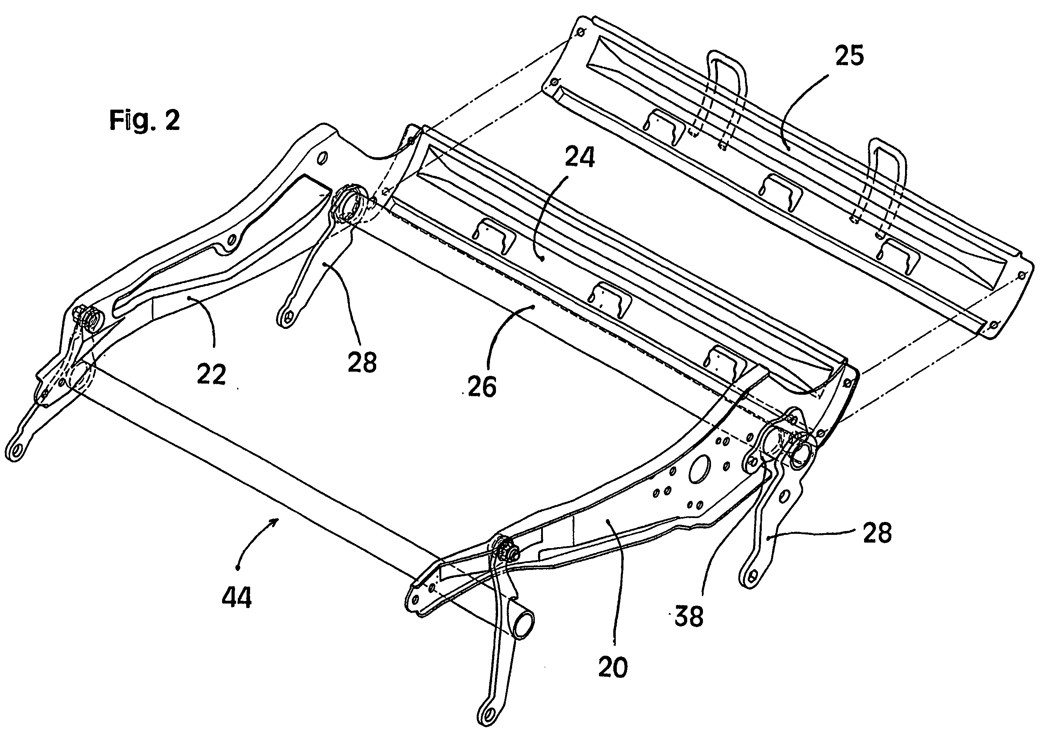

Wie aus Figur 1 und 2 ersichtlich ist, hat der Sitzträger ein linkes Seitenteil 20, ein rechtes Seitenteil 22 und eine rückwärtige Traverse 24. Die Bezeichnungen links und rechts sowie vom und hinten werden immer im Bezug auf einen Passagier gesehen, der auf dem Sitzträger Platz nimmt.

Weiterhin gehört zum Sitzträger eine rückwärtige Querwelle 26, an der ein linker und ein rechter Stellarm 28 festgelegt sind, beispielsweise angeschweißt sind. Wie aus Figur 1 ersichtlich, steht jenseits des rechten Stellarms 28 die Querwelle 26 frei vor, so dass dieser freie Endbereich in eine Lagerbohrung 30 des rechten Seitenteils 22 eingesetzt werden kann. Mittels des eingezeichneten Sicherungsringes 32 erfolgt die Fixierung.

Das linke Seitenteil 20 hat eine Aufnahmebucht 34, die nach unten offen ist. Es sind links und rechts der Aufnahmebucht 34 jeweils Löcher vorgesehen, die als erste Befestigungsmittel 36 bezeichnet werden. Um die Querwelle 26 ist ein Lagerteil 38 angeordnet, das einerseits eine Lagerung der Querwelle 26 übernimmt und andererseits zweite Befestigungsmittel 40 ausbildet, die auch hier als Löcher ausgeführt sind. Das Lagerteil 38 ist so ausgeführt, dass es die Aufnahmebucht 34 überbrückt und nach Befestigung am zugehörigen, linken Seitenteil 20 die (eigentlich dort fehlende) Lagerbohrung für den linken Bereich der Querwelle 26 ausbildet. Im gezeigten Ausführungsbeispiel befindet sich das Lagerteil 38 nach der Montage auf der Innenseite des linken Seitenteils 20, also zwischen den beiden Seitenteilen 20, 22. Der linke Stellarm 28 befindet sich dagegen auf der Außenseite des linken Seitenteils 20.

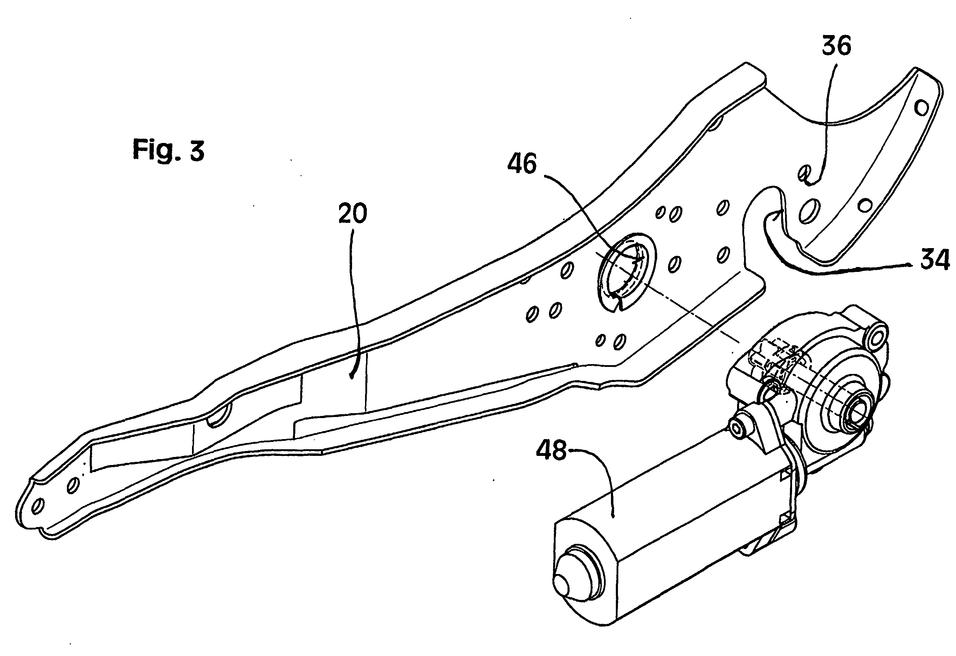

Weitere inwärts auf der Querwelle 26, also vom Lagerteil 38 zum rechten Seitenteil 22 hingewandt ist ein Antriebsteil 42 mit der Querwelle 26 verbunden. Es ist in der konkreten Ausbildung mit einem Zahnbogen versehen, der mit einem Ritzel zusammenwirkt, auf das noch eingegangen wird, siehe Figur 3.

Aus der Beschreibung wird verständlich, dass die Querwelle 26 mit ihren beiden Stellarmen 28, dem Lagerteil 38 und dem Antriebsteil 42 als Baueinheit komplett vorgefertigt werden kann, die später, wie aus Figur 1 durch die strichpunktierte obere Montagelinie ersichtlich ist, in die vorgefertigte Einheit aus den beiden Seitenteilen 20, 22 und der rückwärtigen Traverse 24 eingefügt werden kann.

Wie Figur 1 und 2 zeigen, ist die rückwärtige Traverse 24 an insgesamt vier Verbindungspunkten mit den beiden Seitenteilen 20, 22 verbunden. Diese Verbindungspunkte können als Schweißpunkte ausgeführt sein, sie können aber auch lösbar, beispielsweise über Schraubenverbindungen, erfolgen. Sie können auch durch Niete realisiert sein. Ebenso kann die Verbindung des Lagerteils 38 mit dem Randbereich der Aufnahmebucht 34 mittels der Befestigungsmittel 36, 40 über Schweißen, Vernieten, Schrauben oder dergleichen erfolgen.

Wie Figur 2 zeigt, können zwei unterschiedliche Traversen 24, 25 eingesetzt werden. Die montiert dargestellte Traverse 24 ist eine normale Traverse. Sie hat in bekannter Weise Halterungen für die Aufnahme von Sitzfedern, die nach vorn verlaufen. Sie sind hier nicht dargestellt. Durch Lösen der vier Verbindungspunkte, die entsprechend ausgeführt sind, kann die Traverse 24 ersetzt werden durch eine Traverse 25 mit Bügeln für eine Isofix-Befestigung. Dies ist durch die vier zueinander parallelen, strichpunktierten Montagelinien dargestellt. Die Traverse 25 unterscheidet sich mit Ausnahme der zwei Isofix-Bügel nicht von der Traverse 24.

In Figur 1 ist noch eine vordere Schwenkbrücke 44 eingezeichnet. Sie besteht aus einem Querrohr und zwei Schwenkstützen, die jeweils an ihrem oberen Ende und an inrem unteren Ende eine Lagerbohrung haben und etwa in ihrem Mittelbereich durch das Querrohr fest miteinander verbunden sind. Auch diese Einheit kann vormontiert und nachträglich in die beschriebene Anordnung integriert werden, wie dies ebenfalls anhand der zwei unteren strichpunktierten Montagelinien deutlich wird. An den Endpunkten der beiden Montagelinien befinden sich jeweils Verbindungsmittel, die hier als Schrauben und Muttern ausgeführt sind.

Im vorderen Endbereich der beiden Seitenteile 20, 22 sind jeweils zwei Löcher vorgesehen, hier kann eine vordere Traverse (nicht dargestellt) angeordnet werden.

Wie sich aus Figur 1 und 2 ergibt, sind die beiden Seitenteile 20, 22 im wesentlichen spiegelbildlich baugleich, sie unterscheiden sich jedoch im Bereich der Lagerbohrung 30 bzw. der Aufnahmebucht 34. In Nähe der Aufnahmebucht 34 ist ein Loch im Seitenteil 20 vorgesehen, das hier als Lager 46 (siehe Figur 3) ausgebildet ist. Um dieses Lager 46 sind mehrere Befestigungslöcher vorgesehen. Wie Figur 3 zeigt, kann im Bereich um das Lager 46 ein Elektromotor 48 angeflanscht werden. Er hat folgende Besonderheit: Sein Getriebegehäuse ist in dem, dem Seitenteil 20 zugewandten Bereich offen, dort fehlt also eine Gehäusewand des Getriebegehäuses. Das Seitenteil 20 übernimmt im Bereich um das Lager 46 herum die Funktion der fehlenden Gehäusewand des Getriebegehäuses. Auf diese Weise wird Gewicht gespart, es wird eine präzise Lagerung der Ausgangswelle des Elektromotors 48 im Seitenteil 20 erreicht und die Zuordnung zum Antriebsteil 42 ist günstig.

Es ist auch möglich, anstelle eines Lagers direkt im linken Seitenteil 20 ein entsprechend vergrößertes Lagerteil 38 einzusetzen, das zugleich auch noch die Lagerung der Ausgangswelle des Elektromotors 48 und den Abschluß des Getriebegehäuses übernimmt.

## Patentansprüche

1. Sitzgestell eines verstellbaren Fahrzeugsitzes mit einem Sitzträger, der zwei Seitenteile (20, 22) und eine rückwärtige Traverse (24) aufweist, und mit mindestens einer Querwelle (26) zur Übertragung einer Verstellbewegung von einer Sitzseite auf die andere, die in den beiden Sitzteilen gelagert ist und an der für jede Sitzseite ein Verstellarm befestigt ist, **dadurch gekennzeichnet, dass** mindestens ein Seitenteil eine - vorzugsweise nach unten offene - Aufnahmebucht (34) hat, die die Querwelle (26) frei aufnimmt, dass neben der Aufnahmebucht (34) erste Befestigungsmittel (36) im Seitenteil vorgesehen sind, und dass die Querwelle (26) - vorzugsweise zwischen den an ihr befestigten Verstellarmen (28) - von einem Lagerteil (38) umgriffen wird, das die Lagerung der Querwelle (26) übernimmt, die Aufnahmebucht (34) überbrückt und den ersten Befestigungsmitteln (36) entsprechende zweite Befestigungsmittel (40) ausbildet.

2. Sitzgestell nach Anspruch 1, **dadurch gekennzeichnet, dass** sich das Lagerteil (38) zwischen dem zugehörigen Verstellarm (28) und einem Antriebsteil (42), insbesondere einem Zahnbogen, befindet

3. Sitzgestell nach Anspruch 1, **dadurch gekennzeichnet, dass** nur ein Seitenteil, vorzugsweise das sitzaußenseitige Seitenteil (20), mit der Aufnahmebucht (34) ausgestattet ist, dass das andere Seitenteil eine Lagerbohrung (30) für die Querwelle (26) aufweist, und dass die Querwelle (26) hierzu einen der Lagerbohrung (30) entsprechenden Lagerbereich ausbildet, der sich an einem freien Ende der Querwelle (26) befindet

4. Sitzgestell nach Anspruch 3, **dadurch gekennzeichnet, dass** sich der Verstellarm (28), der der Aufnahmebucht (34) benachbart ist, auf der Außenseite des diese Aufnahmebucht (34) ausbildenden Seitenteils (20) befindet.

5. Sitzgestell nach Anspruch 1, **dadurch gekennzeichnet, dass** die rückwärtige Traverse (24) lösbar mit den Seitenteilen (20, 22) verbunden ist.

6. Sitzgestell nach Anspruch 1, **dadurch gekennzeichnet, dass** eine vordere Schwenkbrücke (44) vorgesehen ist, die zwei Schwenkarme hat, welche jeweils an ihren beiden freien Enden ein Schwenklagerteil, insbesondere eine Lagerbohrung (30), ausbilden und durch ein Querverbindungstell miteinander starr verbunden sind.

7. Sitzgestell nach Anspruch 3 und 6, **dadurch gekennzeichnet, dass** das Schwenklagerteil, das dem mit der Aufnahmebucht (34) versehenen Seitenteil zugeordnet ist, sich an der Außenseite dieses Seitenteils befindet, während das andere Schwenklagerteil an der Innenseite des zugehörigen anderen Seitenteils angeordnet ist.

8. Sitzgestell nach Anspruch 1, **dadurch gekennzeichnet, dass** das Lagerteil (38) die Querwelle (26) zwischen den an ihr befestigten Verstellarmen umgreift.

9. Sitzgestell nach Anspruch 1, **dadurch gekennzeichnet, dass** an der rückseitigen Traverse (24) Haltemittel für eine Kleinkinderaufnahme, insbesondere für eine sogenannte Isofix-Befestigung, vorgesehen sind.

10. Sitzgestell nach Anspruch 1, **dadurch gekennzeichnet, dass** das Lagerteil (38) einstückig mit einem Lagerstück ausgebildet ist, das eine Lagerung der Ausgangswelle für einen zugehörigen elektrischen Antriebsmotor (48) ausbildet.

## Claims

1. Seat frame of an adjustable seat in a vehicle with a seat carrier having two side parts (20, 22) and one rear tie-bar (24), and with at least one transverse shaft (24) for the transmission of an adjusting movement from one side of the seat to the other, said transverse shaft being borne in the two seat parts and having for each seat side an adjusting arm fastened on it, **characterized in that** at least one side part is provided with a location recess (34) - preferably open downwardly - and freely receiving the transverse shaft (26), that in the side part, beside the location recess (34), first fastening means (36) are provided and that the transverse shaft (26) is encompassed by a bearing part (38) - preferably between the adjusting arms (28) fastened on the transverse shaft (26) -, said bearing part (38) bearing the transverse shaft (26), bridging the location recess (34) and constituting second fastening means (40) corresponding to the first fastening means (36).

2. Seat frame according to claim 1, **characterized in that** the bearing part (38) is located between the corresponding adjusting arm (28) and a driving part (42), particularly a toothed quadrant.

3. Seat frame according to claim 1, **characterized in that** only one side part, preferably the side part (20) located on the outer side of the seat, is provided with the location recess (34), that the other side part has a bore for the bearing (30) the transverse shaft (26) and that the transverse shaft (26) is presenting a bearing area corresponding to the bore for the bearing (30), said bearing area being located on one free end of transverse shaft (26).

4. Seat frame according to claim 3, **characterized in that** the adjusting arm (28) which is neighboring the location recess (34) is located on the outer side of the side part (20) forming said location recess (34).

5. Seat frame according to claim 1, **characterized in that** the rear tie-bar (24) is removably connected to the side parts (20, 22).

6. Seat frame according to claim 1, **characterized in that** a front swivelling bridge (44) is provided that has two swivelling arms forming each, on their two free ends, a swivelling bearing part, particularly a bore for the bearing (30), and being rigidly connected to each other by a cross link.

7. Seat frame according to claims 3 and 6, **characterized in that** the swivelling bearing part assigned to the side part provided with the location recess (34) is located on the outer side of this side part, whereas the other bearing part is arranged on the inner side of the corresponding other side part.

8. Seat frame according to claim 1, **characterized in that** the bearing part (38) is encompassing the transverse shaft (26) between the adjusting arms fastened on it.

9. Seat frame according to claim 1, **characterized in that** holding means for the reception of small children, particularly for a so-called Isofix-fastening, are provided on the rear tie-bar (24).

10. Seat frame according to claim 1, **characterized in that** the bearing part (38) is making one with a bearing piece that constitutes a bearing for the output shaft of an auxiliary electric driving motor (48).

## Revendications

1. Bâti de siège d'un siège réglable de véhicule avec un support de siège qui présente deux parties latérales (20, 22) et une traverse arrière (24), et avec au moins un arbre transversal (26) qui est destiné à transmettre un mouvement de réglage d'un côté du siège à l'autre côté et qui est logé dans les deux parties de siège, un bras de réglage pour chaque côté du siège étant fixé sur ledit arbre transversal, **caractérisé par le fait qu'**une partie latérale au moins présente une échancrure de réception (34) de préférence ouverte vers le bas qui reçoit librement ledit arbre transversal (26), que - outre l'échancrure de réception (34) - des premiers moyens de fixation (36) sont prévus dans la partie latérale, et que l'arbre transversal (36) est enserré - de préférence entre les bras de réglage (28) fixés sur celui-ci - par une pièce formant palier (38) qui assure le logement de l'arbre transversal (26), enjambe l'échancrure de réception (34) et forme de seconds moyens de fixation (40) correspondant aux premiers moyens de fixation (36).

2. Bâti de siège selon la revendication 1, **caractérisé par le fait que** la pièce formant palier (38) est située entre le bras associé de réglage (28) et une pièce motrice (42), en particulier un secteur denté.

3. Bâti de siège selon la revendication 1, **caractérisé par le fait qu'**une partie latérale seulement, de préférence la partie latérale (20) située du côté extérieur du siège, est munie de l'échancrure de réception (34), que l'autre partie latérale présente un alésage de support (30) pour l'arbre transversal (26), et que, à cette fin, l'arbre transversal (26) forme une zone de support correspondant à l'alésage de support (30), ladite zone de support étant située à une extrémité libre de l'arbre transversal (26).

4. Bâti de siège selon la revendication 3, **caractérisé par le fait que** le bras de réglage (28) qui est adjacent à ladite échancrure de réception (34) est situé sur la face externe de la partie latérale (20) formant cette échancrure de réception (34).

5. Bâti de siège selon la revendication 1, **caractérisé par le fait que** la traverse arrière (24) est reliée de manière amovible aux parties latérales (20, 22).

6. Bâti de siège selon la revendication 1, **caractérisé par le fait qu'**un pont pivotant avant (44) est prévu qui présente deux bras pivotants lesquels forment, respectivement à leurs deux extrémités libres, une pièce de logement pivotant, en particulier un trou de logement (30), et sont reliés entre eux rigidement par l'intermédiaire d'une pièce transversale de jonction.

7. Bâti de siège selon les revendications 3 et 6, **caractérisé par le fait que** ladite pièce de logement pivotant qui est associée à la partie latérale pourvue de l'échancrure de réception (34) est située sur la face externe de cette partie latérale, tandis que l'autre pièce de logement pivotant est disposée sur la face interne de l'autre partie latérale associée.

8. Bâti de siège selon la revendication 1, **caractérisé par le fait que** la pièce formant palier (38) enserre l'arbre transversal (26) entre les bras de réglage fixés sur celui-ci.

9. Bâti de siège selon la revendication 1, **caractérisé par le fait que** des moyens de retenue pour un dispositif de réception de petits enfants, en particulier pour une fixation dite Isofix, sont prévus sur la traverse arrière (24).

10. Bâti de siège selon la revendication 1, **caractérisé par le fait que** ladite pièce formant palier (38) est réalisée en une pièce avec une pièce de support qui forme un logement de l'arbre de sortie pour un moteur électrique associé d'entraînement (48).
